# EUROPÄISCHE PATENTSCHRIFT

(11) **EP 0 486 508 B1**
(45) Veröffentlichungstag und Bekanntmachung des Hinweises auf die Patenterteilung: **22.12.1993**
(21) Anmeldenummer: 90910554.6
(22) Anmeldetag: 25.07.1990
(51) Int. Cl.: H01F 7/14, F02M 3/06, F16K 31/06

(54) **ELEKTRISCHER DREHSTELLER**
ELECTRICAL GOVERNOR
ACTUATEUR ROTATIF ELECTRIQUE

(30) Priorität: 11.08.1989 DE 3926610
(43) Veröffentlichungstag der Anmeldung: 27.05.1992
(73) Patentinhaber: ROBERT BOSCH GMBH, 70442 Stuttgart (DE)
(72) Erfinder: KRIMMER, Erwin, D-7067 Pluederhausen (DE)
(86) Internationale Anmeldenummer: DE9000566
(87) Internationale Veröffentlichungsnummer: WO9102367

(56) Entgegenhaltungen:
- DE-A- 1 589 733
- DE-A- 1 679 332
- DE-A-33 400 60
- DE-B- 1 127 470
- DE-B- 1 284 212
- US-A- 3 134 404
- US-A- 3 435 394
- US-A-32 061 60

## Beschreibung

Die Erfindung geht aus von einem elektrischen Drehsteller nach der Gattung des Anspruchs 1. Derartige Drehsteller sind z.B. aus der DE-A-37 28 589 (= US-Serial-No. 203 800) bekannt und bestehen herkömmlich aus einem elektrischen Stellmotor, auf dessen herausragender, verlängerter Ankerwelle ein Drosselorgan befestigt ist, das in einer fluidführenden Leitung angeordnet ist. Dieser Drehsteller benötigt somit einen relativ großen Bauraum und zusätzliche Abdichtungen zwischen Drosselorgan und Stellmotor, um unerwünschte Fluidleckagen zu vermeiden.

Die US-A-3 134 404 zeigt ein elektromagnetisch betätigbare Absperrvorrichtung für Rohrleitungen, wobei das Gehäuse ebenfalls Kanäle aufweist. Es handelt sich aber um keinen Stellmotor und die Durchflußmenge ist nicht kontinuierlich regelbar.

### Vorteile der Erfindung

Der erfindungsgemäße Drehsteller mit den kennzeichnenden Merkmalen des Anspruchs 1 hat demgegenüber den Vorteil, daß er wesentlich kleiner und kompakter baut, weniger Einzelteile benötigt und die Vermeidung von Fluidleckage erleichtert wird. Dies wird dadurch erreicht, daß der Anker des Stellmotors selbst das durchströmte Drosselglied bildet.

Durch die in den Ansprüchen 2ff aufgeführten Maßnahmen sind vorteilhafte Weiterbildungen und Verbesserungen des im Anspruch 1 angegebenen Drehstellers möglich. Der weiteren Vereinfachung dient das Einspritzen aller feststehenden Motorteile in ein Kunststoffgehäuse. Vorteilhaft ist auch, den Anker axial justierbar zu lagern, um den die Leckrate bestimmenden Spalt zwischen Drosselorgan und Steueröffnung einstellen zu können.

### Zeichnung

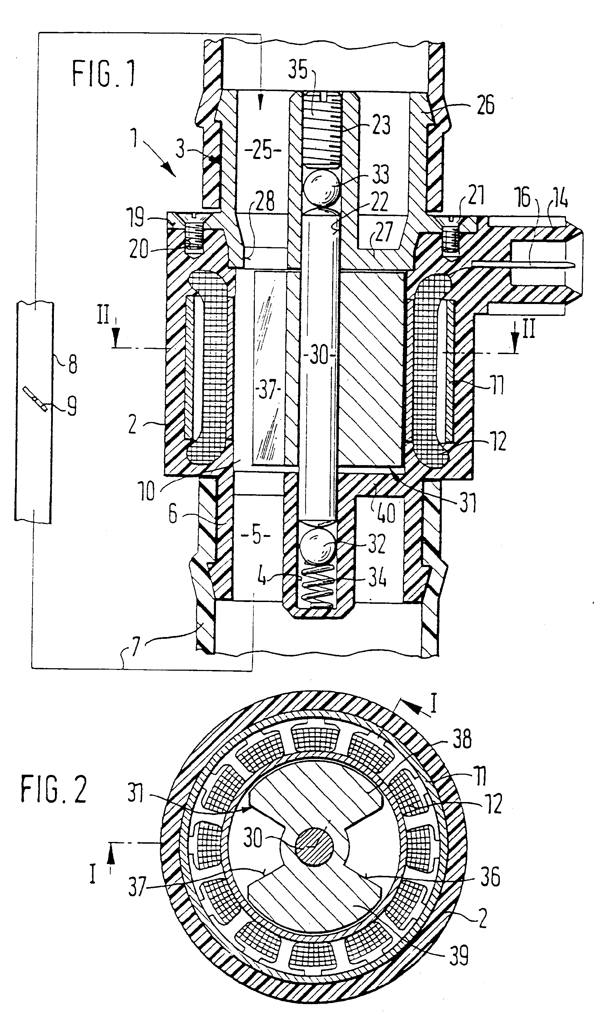

Ein Ausführungsbeispiel der Erfindung ist in der Zeichnung dargestellt und in der nachfolgenden Beschreibung näher erläutert. Figur 1 zeigt einen Drehsteller im Längsschnitt gemäß Linie I-I in Figur 2 und Figur 2 zeigt einen Querschnitt durch den Drehsteller gemäß Linie II-II in Figur 1.

### Beschreibung des Ausführungsbeispiels

Der Drehsteller 1 weist ein zweiteiliges Gehäuse, bestehend aus einem becherförmigen Gehäuseteil 2 aus Kunststoff und einem darauf aufgesetzten und damit verschraubten Anschlußteil 3 auf. Das Gehäuseteil 2 umschließt einen Innenraum 10, von dem ausgehend sich über einen Gehäuseboden 40 des Gehäuseteiles 2 und einen sich daran anschließenden Anschlußstutzen 6 eine mittige Bohrung 4 erstreckt. Seitlich der Bohrung 4 verläuft in Achsrichtung des Gehäusteils 2 ein mit dem durchströmten Innenraum 10 verbundener Kanal 5 innerhalb des Anschlußstutzens 6. Der Anschlußstutzen dient zum Anschluß einer Bypass-Leitung 7 zu einem Ansaugrohr 8 mit Drosselklappe 9 für die Regelung der Verbrennungsluft einer Brennkraftmaschine.

In das Gehäuseteil 2 sind zwei auf einen geblechten, außen genuteten Ständer 11 aufgewickelte Statorwicklungen 12 eingegossen. Diese sind auch gegenüber dem Innenraum 10 dünnschichtig umgossen oder beschichtet. Die Wicklungen sind so verteilt, daß ihre resultierenden Feldvektoren senkrecht aufeinander stehen. Seitlich an dem Gehäuseteil 2 ist eine rechteckige Steckbuchse 14 mit drei Anschlußfahnen angebracht, von denen eine (16) sichtbar ist. Zwei Anschlußfahnen sind jeweils mit einem Ende der Wicklungen 12 verbunden. Die anderen Enden der Wicklungen sind gemeinsam mit der dritten Anschlußfahne 16 verbunden. An der dem Anschlußstutzen 6 abgewandten Stirnseite 19 des Gehäuses 2 sind Gewindelöcher 20 für Schrauben 21 zum Befestigen des Anschlußteils 3 angeordnet. Das Anschlußteil weist eine zentrale Bohrung 22 auf, die dem Gehäuseteil 2 abgewandt teilweise mit einem Innengewinde 23 versehen ist. Seitlich der Bohrung 22 verläuft in deren Achsrichtung im Anschlußteil 3 ein Kanal 25, der in den Innenraum 10 des Gehäuseteils 2 führt und mit dem Kanal 5 fluchtet. Das Anschlußteil 3 bildet einen dem Anschlußstutzen 6 ähnlichen Stutzen 26 zum Anschluß der Bypass-Leitung 7 und wird zum Gehäuseteil 2 hin durch einen Boden 27 abgeschlossen, der durch den Kanal 25 und die Bohrung 22 durchbrochen wird. Die Kante zwischen Boden 27 und Kanal 25 bildet eine Steueröffnung 28.

In den Bohrungen 4, 22 ist eine Welle 30 eines permanentmagnetischen Ankers 31 axial auf Kugeln 32, 33 gelagert. Die Kugel 32 ist mit einer Feder 34 auf dem Grund der beispielsweise sacklochförmig ausgebildeten Bohrung 4 abgestützt. Die Kugel 33 wird von einem in das Gewinde 23 eingesetzten Gewindestift 35 höhenverstellbar gehalten. Der Anker 31 hat im Querschnitt (siehe Fig. 2) eine knochenähnliche bzw. eine Zündanker ähnliche Form, die dadurch entsteht, daß aus einem ursprünglich zylindrischen Teil gegenüberliegend zwei sich in axialer Richtung ertreckende Ausschnitte 36, 37 entfernt sind. Die verbleibenden Zylinderabschnitte bilden die Pole 38, 39 des Ankers 31. Einer der Ausschnitte 37 fluchtet in der in Figur 1 gezeigten Stellung mit den beiden Kanälen 5, 25. Der Anker 31 bildet mit seinen Ausschnitten 36, 37 und seinen Polen 38, 39 ein mechanisches Drosselorgan für das durch die Kanäle 5, 25 hindurchgeleitete Fluid.

Die Steuerung des Fluidstromes durch den Drehsteller 1 erfolgt durch Verdrehen des Ankers bzw. Drosselorgans 31. Dies geschieht in bekannter Weise durch Anlegen einer geeigneten Spannung an die Statorwicklungen 12, 13, sodaß ein auf die Permanentmagnetpole 38, 39 des Ankers 31 wirkendes Magnetfeld entsteht. Beim Verdrehen des Ankers 31 verschließt dieser mit seinen Polen 38, 39 teilweise oder gänzlich die Steueröffnung 28. Eine gegenläufige Drehung des Ankers bewirkt ein Öffnen der Steueröffnung 28 bis bei Übereinstimmung des Ausschnitts 37 mit den Kanälen 5, 25 der volle Regelquerschnitt wieder offen steht. Der Spalt zwischen den einander zugewandten Stirnflächen von Drosselorgan 31 und Boden 27 des Anschlußteiles 3 läßt sich durch Drehen an dem Gewindestift 35 leicht einstellen, so daß toleranzbedingte Leckverluste vermieden werden.

Die Querschnitte der Kanäle 5 und 25 und somit auch der Steueröffnung 28 können rund, dreieckförmig, rechteckförmig oder ähnlich ausgebildet sein. Die Querschnitte der Ausschnitte 36 und 37 des Ankers 31 können wie dargestellt U-förmig mit nach außen geneigten Schenkeln, dreieckförmig, rechteckförmig oder ähnlich ausgebildet sein.

Vorzugsweise sind die Kanalquerschnitte und die Ausschnittquerschnitte gleich und zwar zur Erzielung eines möglichst großen Strömungsquerschnitts etwa kreissektorförmig bzw. trapezähnlich, wie in Figur 2 dargestellt.

Die Erfindung beschränkt sich nicht auf das konkrete Ausführungsbeispiel. Insbesondere kann der Antrieb des Ankers auch durch andere Statoranordnungen erfolgen. Auch die axiale und radiale Lagerung der Ankerwelle kann durch andere bekannte Lagerungen ersetzt werden, z.B. durch eine Lagerung auf Spitzen statt auf Kugeln. Zur Vergrößerung des Regelquerschnittes ist es auch möglich, jeweils zwei gegenüberliegende Kanäle in jedem Gehäuseteil auszubilden, die dann mit jeweils einem Ankerausschnitt korrespondieren.

## Patentansprüche

1. Elektrischer Drehsteller, insbesondere zur Steuerung eines Drosselquerschnittes in einer Betriebsmittel führenden Leitung einer Brennkraftmaschine, mit einem einen Stellmotor mit Wicklungen und Magnetpolen umschließenden Gehäuse (2,3), in dem sich ein gegenüber den Wicklungen und den Magnetpolen drehbarer permanentmagnetischer Anker befindet, der mit einem Drosselorgan in Verbindung steht, dadurch gekennzeichnet, daß das Gehäuse (2, 3) Kanäle (5, 25) aufweist, die in einen Innenraum (10) zwischen den Wicklungen (12, 13) führen und von denen jeder an einer anderen Stirnfläche des Ankers (31) endet, und daß der Anker (31) mindestens einen sich in axialer Richtung erstreckenden Ausschnitt (36, 37) aufweist, der in fluchtende Stellung mit den Kanälen (5, 25) bringbar ist, und daß der drehbare Anker (31) selbst das Drosselorgan (31) bildet, durch das das zu regelnde Fluid geleitet wird.

2. Drehsteller nach Anspruch 1, dadurch gekennzeichnet, daß die Wand eines der Kanäle (25) eine mit dem Drosselorgan (31) zusammenwirkenden Steueröffnung (28) bildet.

3. Drehsteller nach Anspruch 1 oder 2, dadurch gekennzeichnet, daß die Wicklungen (12, 13) in Kunststoff eingespritzt und gegenüber dem fluiddurchflossenen Innenraum (10) abgedichtet sind.

4. Drehsteller nach einem der vorhergehenden Anspruche, dadurch gekennzeichnet, daß ein die Wicklungen (12, 13) aufnehmender Ständer (11) spaltfrei umspritzt ist.

5. Drehsteller nach einem der vorhergehenden Ansprüche, dadurch gekennzeichnet, daß der Ständer (11) zu dem Fluidraum (10) hin mit einer undurchlässigen Beschichtung versehen ist.

6. Drehsteller nach einem der vorhergehenden Ansprüche, dadurch gekennzeichnet, daß der Anker (31) fest mit einer spitzengelagerten Welle (30) verbunden ist.

7. Drehsteller nach einem der vorhergehenden Ansprüche 1 bis 5, dadurch gekennzeichnet, daß der Anker (31) mit einer axial auf Kugeln (32, 33) gelagerten Welle (30) verbunden ist.

8. Drehsteller nach einem der vorhergehenden Ansprüche, dadurch gekennzeichnet, daß die axiale Lage der Welle (30) einstellbar ist, um das Spiel zwischen Drosselorgan (31) und Steueröffnung (28) zu justieren.

9. Drehsteller nach einem der vorhergehenden Ansprüche, dadurch gekennzeichnet, daß die Welle (30) einseitig unter der Kraft einer Feder (34) steht, die das Drosselorgan (31) axial in Richtung auf die Steueröffnung (28) hin drängt.

10. Drehsteller nach einem der vorhergehenden Ansprüche, dadurch gekennzeichnet, daß der Querschnitt der Kanäle (5, 25) und der Ausschnitte (36, 37) etwa kreissegmentförmig ist.

## Claims

1. Electric rotary actuator, particularly for controlling a throttle cross section in a line, conducting operating fluid, of an internal combustion engine, comprising a housing (2,3) enclosing a motor actuator with windings and magnetic poles, in which a permanent magnetic armature is located which can be rotated with respect to the windings and magnetic poles and which is connected to a throttle member, characterised in that the housing (2, 3) exhibits ducts (5, 25) which lead into an interior space (10) between the windings (12, 13) and each of which ends at another end face of the armature (31), and in that the armature (31) exhibits at least one cutout (36, 37) extending in the axial direction, which can be brought into alignment with the ducts (5, 25), and in that the rotatable armature (31) itself forms the throttle member (31) through which the fluid to be controlled is conducted.

2. Rotary actuator according to Claim 1, characterised in that the wall of one of the ducts (25) forms a control opening (28) acting in conjunction with the throttle member (31).

3. Rotary actuator according to Claim 1 or 2, characterised in that the windings (12, 13) are injection moulded in plastic and are sealed with respect to the interior space (10) through which the fluid flows.

4. Rotary actuator according to one of the preceding claims, characterised in that a stator (11) accommodating the windings (12, 13) is moulded in without gap.

5. Rotary actuator according to one of the preceding claims, characterised in that the stator (11) is provided with an impermeable coating towards the fluid space (10).

6. Rotary actuator according to one of the preceding claims, characterised in that the armature (31) is permanently connected to a point-supported shaft (30).

7. Rotary actuator according to one of the preceding Claims 1 to 5, characterised in that the armature (31) is connected to a shaft (30) which is axially supported on balls (32, 33).

8. Rotary actuator according to one of the preceding claims, characterised in that the axial position of the shaft (30) can be adjusted in order to adjust the play between throttle member (31) and control opening (28).

9. Rotary actuator according to one of the preceding claims, characterised in that the shaft (30) is unilaterally subjected to the force of a spring (34) which axially urges the throttle member (31) in the direction of the control opening (28).

10. Rotary actuator according to one of the preceding claims, characterised in that the cross section of the ducts (5, 25) and of the cutouts (36, 37) is approximately circle-segment-shaped.

## Revendications

1. Actuateur rotatif électrique notamment pour commander une section d'étranglement d'une conduite traversée par un fluide de fonctionnement d'un moteur thermique, comportant un boîtier (2, 3) entourant un moteur de réglage avec ses enroulements et ses pôles magnétiques, boîtier dans lequel se trouve un induit à aimantation permanente tournant par rapport aux enroulements et aux pôles magnétiques, cet induit étant relié à un organe d'étranglement, actuateur caractérisé en ce que le boîtier (2, 3) comporte des canaux (5, 25) qui conduisent dans un volume intérieur (10) entre des enroulements (12, 13) et chacun de ces canaux se termine sur l'autre face frontale de l'induit (31), et l'induit (31) présente une découpe (36, 37) s'étendant au moins dans la direction axiale, cette découpe pouvant être mise en alignement avec les canaux (5, 25) et en ce que l'induit tournant (31) forme lui-même l'organe d'étranglement (31) traversé par le fluide à régler.

2. Actuateur rotatif selon la revendication 1, caractérisé en ce que la paroi de l'un des canaux (25) forme une ouverture de commande (28) coopérant avec l'organe d'étranglement (31).

3. Actuateur selon la revendication 1 ou 2, caractérisé en ce que les enroulements (12, 13) sont injectés en matière plastique et sont fermés de manière étanche par rapport au volume intérieur (10) traversé par le fluide.

4. Actuateur rotatif selon l'une des revendications précédentes, caractérisé en ce qu'un stator (11) recevant les enroulements (12, 13) est injecté sans laisser d'intervalle.

5. Actuateur rotatif selon l'une des revendications précédentes, caractérisé en ce que le stator (11) est muni en direction de la chambre de fluide (10), d'un revêtement imperméable.

6. Actuateur rotatif selon l'une des revendications précédentes, caractérisé en ce que l'induit (31) est relié solidairement à un axe (30) monté sur des pointes.

7. Actuateur rotatif selon l'une des revendications précédentes, caractérisé en ce que l'induit (31) est relié à un axe (30) monté axialement sur des billes (32, 33).

8. Actuateur rotatif selon l'une des revendications précédentes, caractérisé en ce que la position axiale de l'arbre (30) est réglable pour ajuster le jeu entre l'organe d'étranglement (31) et l'ouverture de commande (28).

9. Actuateur rotatif selon l'une des revendications précédentes, caractérisé en ce que l'axe (30) est soumis d'un côté à la force d'un ressort (34) qui pousse l'organe d'étranglement (31), dans la direction axiale, sur l'ouverture de commande (28).

10. Actuateur rotatif selon l'une des revendications précédentes, caractérisé en ce que la section des canaux (5, 25) et des découpes (36, 37) correspond sensiblement à une forme de segment de cercle.
